# EUROPÄISCHE PATENTSCHRIFT

(11) **EP 1 318 342 B1**
(45) Veröffentlichungstag und Bekanntmachung des Hinweises auf die Patenterteilung: **16.08.2006**
(21) Anmeldenummer: 02406021.2
(22) Anmeldetag: 26.11.2002
(51) Int. Cl.: F16L 5/04

(54) **Wanddurchführung für Leitungen**
Wall feedthrough for pipes
Traversée de paroi pour conduites

(30) Priorität: 05.12.2001 DE 10159575
(43) Veröffentlichungstag der Anmeldung: 11.06.2003
(73) Patentinhaber: HILTI Aktiengesellschaft, 9494 Schaan (LI)
(72) Erfinder: Leibhard, Erich, 81476 München (DE); Münzenberger, Herbert, 65191 Wiesbaden (DE); Hoffmann, Armin, 86899 Landsberg (DE); Förg, Christian, 86807 Buchloe (DE); Monden, Thomas, 87778 Stetten (DE)
(74) Vertreter: Wildi, Roland

(56) Entgegenhaltungen:
- EP-A- 0 982 522
- WO-A-01/62343
- DE-A- 19 725 301
- DE-A- 19 915 667
- DE-U- 29 601 204
- US-A- 5 498 466

## Beschreibung

Die Erfindung bezeichnet eine Anordnung und ein Verfahren zur Wanddurchführung für Leitungen wie Stromleitungen oder Wasserleitungen durch eine Durchbruchsöffnung, insbesondere zur Überbrückung von Hohlräumen in den Wänden wie Seitenwände, Trennwände, Decken usw.

Nach der DE19915667 wird der Zwischenringraum zwischen Leitung und Durchbruchsöffnung mit einem expandierbaren Material wie Polymerschaum ausgeschäumt. Bei Hohlräumen in den Wänden dringt das expandierbare Material nicht unwesentlich in diese Hohlräume ein ohne den zur vollständig dichten Ausfüllung des Zwischenringraumes erforderlichen Eigendruck entfalten zu können.

Nach der DE19955765 wird der Zwischenringraum mit einem um die Leitung gewickelten, später selbstexpandierten Band verschlossen, welches zwar kleinere Hohlräume in den Wänden, grössere wie zwischen Sparverschalungen jedoch ebenfalls nicht überbrücken kann.

Nach der US5040351 wird in die Durchbruchsöffnung der Wand eine vorgefertigte steife Hülse eingebracht, welche Teil der Durchführung von Leitungen ist. Derartige vorgefertigte steife Hülsen eignen sich nur für Durchbruchsöffnungen gleichen Durchmessers und müssen vor der Durchführung der Leitung eingebracht werden.

Zudem wird zum axial äusseren Abschluss des mit Mineralwolle ausgefüllten Zwischenringraums nach der DE2551693 ein in der Ebene der Wandfläche angeordnetes Streckblech verwendet. Um eine Wärmeleitungsbrücke zwischen Leitung und Wand auszubilden ist nach der US5058346 das Volumen des kompletten Zwischenringraums mit schalenförmig ineinander gesteckten Metallstreckblechen ausgefüllt. Für Befestigungen an Wänden mit Hohlräumen durch in Sackbohrlöcher eingeklebte Dübel werden nach der DE3535251 diese Dübel radial aussen umgebende, axial einseitig geschlossene Dübelhülsen aus Metallgitter oder durchbrochenem Metallblech verwendet, welche zuvor in das Sackbohrloch eingeführt werden.

Zudem ist nach der DE3643708 intumeszenzfähiges Material auf ein Streckmetall oder Metallgewebe aufgebracht. Die DE19620893 offenbart ein intumeszenzfähiges Klebeband.

Die EP 0 982 522 A1 offenbart eine Brandschutzvorrichtung mit einem biegsamen Mantel an dessen Innenseite eine Brandschutzeinlage aus biegbarem Material vorgesehen ist. Der Mantel weist eine Anzahl von im Wesentlichen gradlinig ausgebildeten Zonen mit reduzierter Wanddicke auf, in denen Schlitze angeordnet sind. Entlang dieser Zonen ist die Brandschutzvorrichtung biegbar so dass diese hülsenförmig um ein Rohr herumlegbar ist. An einer Schmalseite des Mantels sind genau zwei Schlitze angeordnet in die Zungen, welche an der anderen Schmalseite des Mantels angeordnet sind, zur Bildung eines Verschlusses einführbar sind.

Die WO 01/62343 A1 offenbart eine Feuer- und Hitzesperre, die aus einem mit Durchbrüchen versehenen Schlauch besteht. Der Innenraum des Schlauches ist mit einem intumeszierenden Material versehen, das im Brandfall expandiert und durch die Durchbrüche nach aussen austritt. Die Feuer- und Hitzesperre kann an Rohren und Luftschächten in Gebäudedurchbrüchen verwendet werden.

Aus der DE 296 01 204 U1 ist eine Mauerdurchführung eines Kabels gemäß dem Oberbegriff des Auspzuchs 1 bekannt, die einen Schrumpfschlauch aufweist in dessen mittlerem Abschnitt eine Stahlspirale angeordnet ist. Der Schrumpfschlauch ist in einer Bohrung einer Mauer angeordnet, wobei zwischen der Innenwand der Bohrung und dem Schrumpfschlauch Zementmörtel zur Fixierung der Abdichtung eingebracht ist. Das Kabel ist innerhalb des Schrumpfschlauchs mit einem Wärmeschutzbauteil ummantelt, das aus einem Durchbrechungen aufweisenden, beschichteten Trägermaterial besteht.

Die Aufgabe der Erfindung besteht In einer zur Überbrückung von Hohlräumen geeigneten Wanddurchführung für Leitungen.

Die Aufgabe wird im wesentlichen durch die Merkmale der unabhängigen Ansprüche gelöst. Vorteilhafte Weiterbildungen ergeben sich aus den Unteransprüchen.

Im wesentlichen ist bei einer Wanddurchführung für zumindest eine Leitung im mit ausschäumbaren Material ausgefüllten Zwischenringraum zwischen einer Durchbruchsöffnung in einer Wand und der Leitung ein flächiges, im wesentlichen koaxial hülsenförmig um die Leitung herum sowie im Durchmesser der Durchbruchsöffnung ausgeformtes, eigensteifes Formelement angeordnet, welches in seiner Fläche durch eine Vielzahl von Öffnungen perforiert ist.

Das perforierte Formelement weist bezüglich seiner bei hülsenförmiger Ausformung axialen Stirnkanten einen glatten, weiter in einem Randstreifen nicht perforierten, Seitenrand auf, wodurch von über die Wandfläche überstehenden Bereichen des Formelements keine Verletzungsgefahr ausgeht.

Der Seitenrand weist einen kontinuierlichen oder zumindest stückweise periodisch längs verlaufenden Verschlussmechanismus zu sich selbst auf, wodurch bei hülsenförmiger Ausformung des perforierten Formelements der Mantel an den Stirnkanten verschliessbar ist.

Durch das flächighülsenförmige, eigensteife Formelement, welches in der Durchbruchsöffnung die Hohlräume in der Wand zumindest teilweise abdeckt, bildet sich nach dem Einbringen des expandierbaren und aushärtenden Materials auch bei Hohlräumen der zur dichten Ausfüllung des Zischenringraums erforderliche Druck auf. Das teilweise durch die Vielzahl der Öffnungen in dem perforierten Formelement dosiert hindurchquellende expandierbare Material verbindet nach dem Aushärten das Formelement und die Leitung formschlüssig fest mit der Wand.

Vorteilhaft ist das perforierte Formelement aus einem manuell plastisch verstreckbaren Material, weiter vorteilhaft aus Streckmetallblech, Metallgewebe, perforiertem Metallblech mit mindestens 50% Öffnungen oder einem Plastikgitter mit mindestens. 50% Öffnungen, ausgebildet, wodurch ein universelles Formelement vor dem Einbringen in die Durchbruchsöffnung manuell auf unterschiedliche Wandstärken formbar Ist.

Vorteilhaft ist das perforierte Formelement bezüglich seiner bei hülsenförmiger Ausformung umfänglich geringförmig überlappenden Seitenkanten gleichartig ausgebildet, wodurch es bspw. mit einer Blechschere von einem in Meterware vorliegendem Band auf den Umfang der jeweiligen Durchbruchsöffnung ablängbar ist.

Bei der Abdichtung des Zwischenringraums wird zuerst aus in Meterware verfügbarem Bandmaterial entsprechend dem Umfang der Durchbruchsöffnung unter Berücksichtigung eines Überlappungsbereiches von einigen cm und einem später durch Querkontraktion auftretenden Längenverlustes das perforierte Formelement abgelängt, danach dieses plastisch auf die Wandstärke verstreckt, wobei die Querkontraktion eintritt, anschliessend das Formelement hülsenförmig um die Leitung herum gebogen und im Überlappungsbereich umfänglich mit dem Verschlussmechanismus geschlossen. Nachdem es axial in die Durchbruchsöffnung eingeführt wurde, wird der Zwischenringraum zwischen Leitung und Formelement ausgeschäumt, wobei das dosiert durch das perforierte Formelement hindurchquellende, expandierende und aushärtende Material das Formelement an der Wand befestigt.

Eine weitere Möglichkeit besteht bei Brandschutzprodukten zur Abdichtung eines Zwischenringraums in der Verwendung des perforierten Formelements, bspw. von Streckmetall, in Kombination mit einem radial innen angeordneten intumeszenzfähigen Material, welches bei einem Brandereignis expandiert und den Zwischenringraum ausfüllt.

Ein Brandschutzprodukt umfasst im wesentlichen ein eigensteifes Formelement, welches in seiner Fläche durch eine Vielzahl von Öffnungen perforiert ist und ein flächig zugeordnetes intumeszenzfähiges Material, wobei das eigensteife Formelement koaxial hülsenförmig um die Leitung herum biegbar sowie im Zwischenringraum zwischen einer Durchbruchsöffnung in einer Wand und der Leitung einbringbar ist und zumindest im Bereich der Platznahme in der Durchbruchsöffnung der Wand das intumeszenzfähige Material aufweist.

Bei Brandschutzprodukten sind vorteilhaft die Öffnungen des perforierten Formelements kleiner 50 mm², wodurch das expandierende intumeszenzfähige Material nur unwesentlich durch das perforierte Formelement hindurch quellen kann, dieses jedoch plastisch deformierbar bleibt.

Bei Brandschutzprodukten ist das perforierte Formelement vorteilhaft mit einer Schicht aus intumeszenzfähigen Material versehen, welches somit gleichmässig verteilt und mechanisch stabil unterstützt wird.

Bei Brandschutzprodukten ist vorteilhaft das perforierte Formelement mit einer Schicht aus intumeszenzfähigen Material mehrfach übereinander, spiralförmig um die Leitung herum gewickelt, wodurch die radiale Ausdehnung des Wickels dem Zwischenringraum anpassbar ist.

Bei Brandschutzprodukten sind vorteilhaft ausschliesslich beide Stirnkanten des perforierten Formelements mit einer bandförmigen Schicht aus intumeszenzfähigen Material versehen, wodurch bei Wänden mit Hohlräumen ein zuverlässiges Abdichten der Zwischenringräume beidseitig des Hohlraums erfolgt, ohne unnötiges intumeszenzfähiges Material wirkungslos im Hohlraum anzuordnen.

Die Erfindung wird bezüglich eines vorteilhaften Ausführungsbeispiels näher erläutert mit:
Fig. 1 als Meterware
Fig. 2 als perforiertes Formelement
Fig. 3 als verstrecktes perforiertes Formelement
Fig. 4 als vergrösserte Einzelheit im Bereich IV der Fig. 3
Fig. 5 als Hohlwand
Fig. 6 als Einzelheit
Fig. 7 als Wanddurchführung
Fig. 8 als Brandschutzprodukt
Fig. 8A als vergrösserte Einzelheit im Bereich VIII A der Fig. 8.

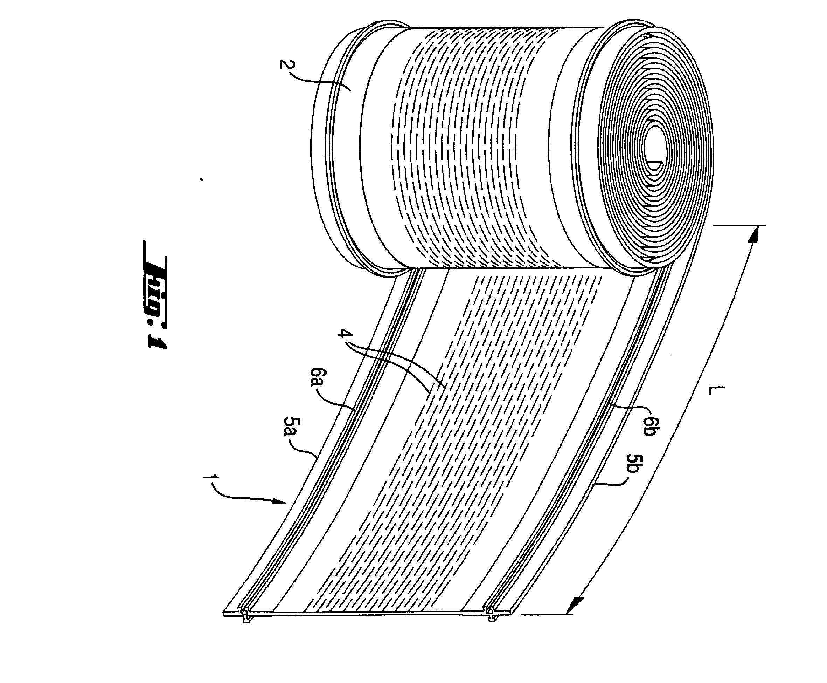

Nach Fig. 1 liegt ein perforiertes Formelement 1 einer Länge L in Meterware als Band 2 verfügbar auf einer Bandrolle vor.

Nach Fig. 2 weist das aus Streckmetallblech der Länge L ausgeführte perforierte Formelement 1 gleichartig ausgebildete Seitenkanten 3a, 3b auf.

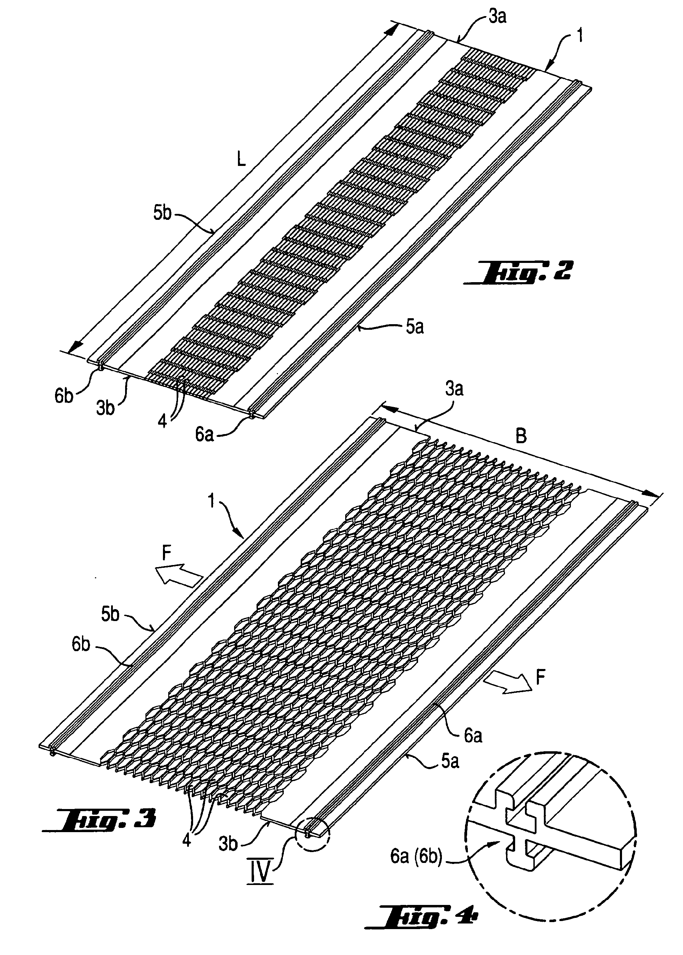

Nach Fig. 3 weist das mit 50% Öffnungen 4 perforierte Formelement 1 eine mit manueller Zugkraft F plastisch verstreckte Breite B zwischen den in einem Randstreifen nicht perforierten glatten Seitenrändern 5a, 5b auf, welche je einen kontinuierlich längs verlaufenden, formschlüssigen Verschlussmechanismus 6a, 6b zu sich selbst aufweisen, der in Fig. 4 als Einzelheit dargestellt ist.

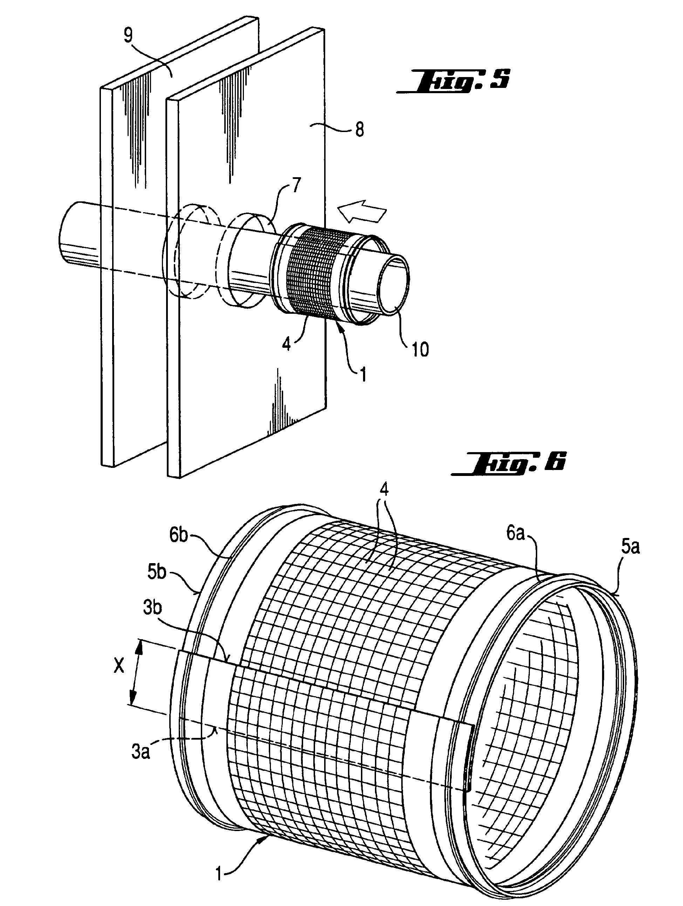

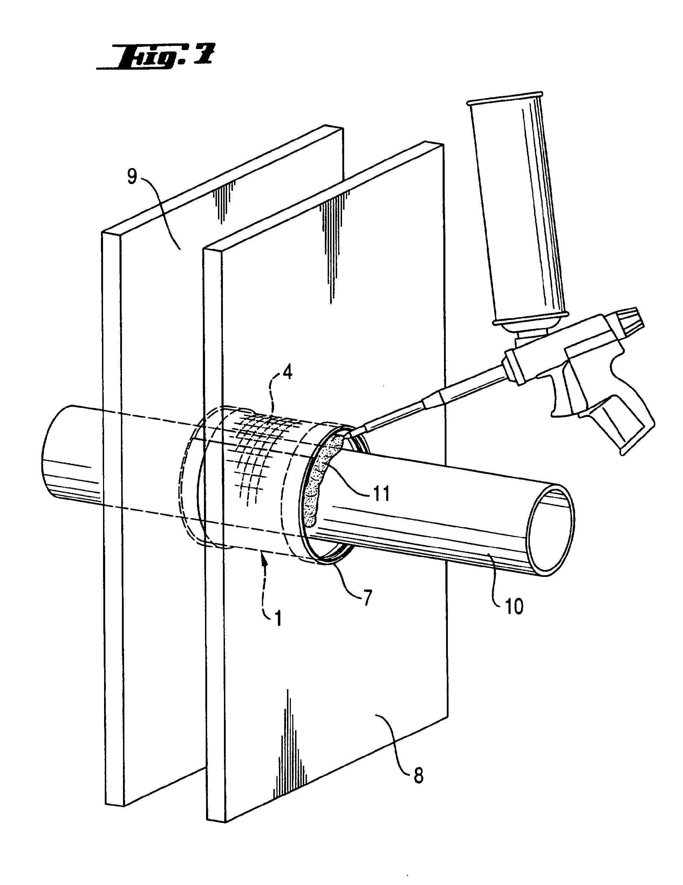

Nach Fig. 5 ist das verstreckte perforierte Formelement 1 hülsenförmig um eine durch eine Durchbruchsöffnung 7 in einer Wand 8 mit Hohlräumen 9 hindurchgehende Leitung 10 herum gebogen, nach der in Fig. 6 dargestellten Einzelheit im Überlappungsbereich X mit den die Stirnkanten ausbildenden Seitenrändern 5a, 5b umfänglich mit dem Verschlussmechanismus 6a, 6b geschlossen, und wird schliesslich axial in die Durchbruchsöffnung 7 eingeführt.

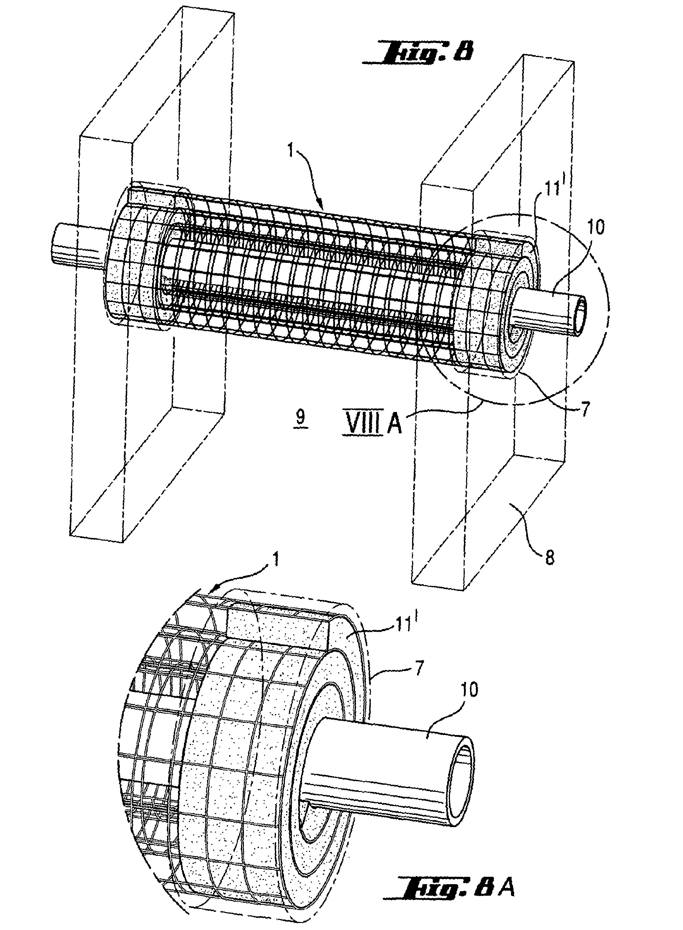

Nach Fig. 7 wird der Zwischenringraum zwischen Leitung 10 und Formelement 1 mit einem expandierenden und aushärtenden Material 11 ausgeschäumt.

Die Folge der Fig. 1, Fig. 2, Fig. 3, Fig. 5, Fig. 7 illustriert im wesentlichen das Verfahren.

Nach Fig. 8 ist bei einem Brandschutzprodukt das entsprechend abgelängte und verstreckte perforierte Formelement 1 in Form eines intralaminar vorgefalteten Metallgitters mit 5 mm x 5 mm Maschenweite mehrfach übereinander, spiralförmig um eine durch eine Durchbruchsöffnung 7 in einer Wand 8 mit einem Hohlraum 9 hindurchgehende Leitung 10 herum gebogen. Ausschliesslich beide Stirnkanten des perforierten Formelements 1 sind mit einer bandförmigen, ca. 20 mm breiten und 5 mm dicken Schicht aus intumeszenzfähigen Material 11' versehen, welche jeweils axial ausserhalb des Hohlraums 9 der Wand 8 benachbart zugeordnet ist.

## Patentansprüche

1. Wanddurchführung für zumindest eine Leitung (10) In einem, mit ausschäumbaren Material (11) ausgefüllten Zwischenringraum zwischen einer Durchbruchsöffnung (7) in einer Wand (8) und der Leitung (10), wobei im Zwischenringraum ein flächiges, im wesentlichen koaxial hülsenförmig um die Leitung (10) herum sowie im Durchmesser der Durchbruchsöffnung (7) ausgeformtes, eigensteifes Formelement (1) angeordnet ist, welches in seiner Fläch durch eine Vielzahl von Öffnungen (4) perforiert ist, und wobei das perforierte Formement (1) bezüglich seiner bei hülsenförmiger Ausformung axialen Stirnkanten einen glatten Seltenrand (5a, 5b) aufweist, **dadurch gekennzeichnet, dass** das perforierte Formelement (1) in zumindest einem Randstreifen nicht perforiert ist, der einen kontinuierlichen oder zumindest stückweise periodisch längs verlaufenden Verschlussmechanismus (6a, 6b) zu sich selbst aufweist.

2. Wanddurchführung nach Anspruch 1, **dadurch gekennzeichnet, dass** das perforierte Formelement (1) aus einem manuell verstreckbaren Material ausgebildet ist.

3. Wanddurchführung nach Anspruch 1 oder 2, **dadurch gekennzeichnet, dass** das perforierte Formelement (1) bezüglich seiner bei hülsenförmiger Ausformung umfänglich geringförmig überlappenden Längskanten (3a, 3b) gleichartig ausgebildet ist.

4. Wanddurchführung nach Anspruch 3, **dadurch gekennzeichnet, dass** das perforierte Formelement (1) von einem In Meterware vorliegendem Band (2) ablängbar ist.

5. Verfahren zur Abdichtung eines Zwischenringraums mit einer, Wanddurchführung nach einem der vorherigen Ansprüche, **dadurch gekennzeichnet, dass** in einem ersten Schritt das perforierte Formelement (1) manuell plastisch auf die Wandstärke verstreckt wird, In einem zweiten Schritt das perforierte Formelement (1) hülsenförmig um die Leitung (10) herum gebogen sowie Im Überlappungsbereich (X) umfänglich mit dem Verschlussmechanismus (6a, 6b) geschlossen wird, in einem weiteren Schritt das hülsenförmig perforierte Formelement (1) axial in die Durchbruchsöffnung (7) eingeführt wird und In einem letzten Schritt der Zwischenringraum zwischen Leitung (10) und Formelement (1) mit einem expandierbaren und aushärtenden Material (11) ausgeschäumt wird, wobei das dosiert durch das perforierte Formelement (1) hindurchquellende expandierende und aushärtende Material (11) das Formelement (1) an der Wand (8) befestigt.

6. Verfahren nach Anspruch 5, **dadurch gekennzeichnet, dass** in einem vorgelagerten Schritt das perforierte Formelement (2) aus dem in Meterware verfügbaren Band (2) abgelängt wird.

7. Wanddurchfuhrung nach Anspruch 1 ausgebildet als **dadurch gekennzeichnet, dass** das eigensteife Formelement (1) zumindest im Bereich der Platznahme in der Durchbruchsöffnung (7) der Wand (8) ein intumeszenzfähiges Material (11') aufweist.

8. Brandschutzprodukt nach Anspruch 7, **dadurch gekennzeichnet, dass** die Öffnungen (4) des perforierten Formelements (1) kleiner 50 mm² sind.

9. Brandschutzprodukt nach Anspruch 7 oder 8, **dadurch gekennzeichnet, dass** das perforierte Formelement (1) zumindest teilweise mit einer Schicht aus intumeszenzfähigen Material (11') versehen ist.

10. Brandschutzprodukt nach Anspruch 9, **dadurch gekennzeichnet, dass** das perforierte Formelement (1) mit einer Schicht aus intumeszenzfähigen Material (11') mehrfach übereinander, spiralförmig um die Leitung (10) herum gewickelt ist.

11. Brandschutzprodukt nach einem der Ansprüche 7 bis 10, **dadurch gekennzeichnet, dass** beide Stirnkanten des Formelements (1) mit einer bandförmigen Schicht aus Intumeszenzfähigen Material (11') versehen sind.

## Claims

1. Wall duct for at least one line (10) in an intermediate annular space between an opening (7) in a wall (8) and the line (10) filled with expandable material (11), a flat, inherently rigid form element (1) formed essentially coaxially in a sleeve-shaped manner around the line (10) and having the same diameter as the opening (7) and the surface of which is provided with a plurality of perforations (4) being arranged in the intermediate annular space, and the axial end edges of the perforated form element (1) forming a smooth side edge (5a, 5b) when it is formed in a sleeve-shaped manner, **characterised in that** the perforated form element (1) is not perforated in at least one edge strip having its own continuous or at least piecewise periodically longitudinally extending closure mechanism (6a, 6b).

2. Wall duct according to claim 1, **characterised in that** the perforated form element (1) is formed of a manually stretchable material.

3. Wall duct according to claim 1 or claim 2, **characterised in that** the longitudinal edges (3a, 3b) of the perforated form element (1) slightly overlapping one another circumferentially when it is formed in a sleeve-shaped manner have a similar design.

4. Wall duct according to claim 3, **characterised in that** the perforated form element (1) can be cut to length from a piece goods web (2).

5. Method of sealing an intermediate annular space by means of a wall duct according to one of the preceding claims, **characterised in that**, in a first step, the perforated form element (1) is stretched manually plastically to the wall thickness, in a second step, the perforated form element (1) is bent in a sleeve-shaped manner around the line (10) and closed circumferentially in the overlapping region (X) by the closure mechanism (6a, 6b), in a further step, the form element (1) perforated in a sleeve-shaped manner is inserted axially into the opening (7) and, in a final step, the intermediate annular space between the line (10) and the form element (1) is filled with an expandable, hardening material (11), the expanding, hardening material (11) pouring in a metered manner through the perforated form element (1) securing the form element (1) to the wall (8).

6. Method according to claim 5, **characterised in that**, in a preceding step, the perforated form element (1) is cut to length from the piece goods web (2).

7. Wall duct according to claim 1 designed as a fire protection product, **characterised in that** the inherently rigid form element (1) comprises an intumescent material (11') at least in the region in which it is located in the opening (7) in the wall (8).

8. Fire protection product according to claim 7, **characterised in that** the openings (4) in the perforated form element (1) are smaller than 50 mm².

9. Fire protection product according to claim 7 or claim 8, **characterised in that** the perforated form element (1) is provided at least partially with a layer of intumescent material (11').

10. Fire protection product according to claim 9, **characterised in that** the perforated form element (1) with a layer of intumescent material (11') is wound spirally several times around the line (10).

11. Fire protection product according to one of claims 7 to 10, **characterised in that** both end edges of the perforated form element (1) are provided with a strip-shaped layer of intumescent material (11').

## Revendications

1. Traversée de paroi pour au moins une conduite (10), dans un interstice annulaire ménagé entre une ouverture traversante (7) pratiquée dans une paroi (8) et la conduite (10) et rempli de matière moussable (11), dans laquelle, dans l'interstice annulaire est disposé un élément de forme, mince, à rigidité propre (1), qui est conformé en manchon entourant sensiblement coaxialement la conduite (10), dont le diamètre correspond à celui de l'ouverture traversante (7) et dont la surface est perforée par une pluralité d'orifices (4), et l'élément de forme perforé (1) comportant un bord latéral lisse (5a, 5b) sur ses arêtes frontales orientées axialement lorsqu'il est conformé en manchon, **caractérisé en ce que** l'élément de forme perforé n'est pas perforé dans au moins une bande de bord, laquelle comporte un mécanisme longitudinal de fermeture sur elle-même continu ou au moins périodiquement segmenté (6a, 6b).

2. Traversée de paroi selon la revendication 1, **caractérisée en ce que** l'élément de forme perforé (1) est réalisé en un matériau étirable manuellement.

3. Traversée de paroi selon la revendication 1 ou 2, **caractérisée en ce que** l'élément de forme perforé (1) présente une configuration identique au niveau de chacune de ses arêtes longitudinales (3a, 3b) qui se chevauchent légèrement en périphérie lorsqu'il est conformé en manchon.

4. Traversée de paroi selon la revendication 3, **caractérisée en ce que** l'élément de forme perforé (1) peut être tronçonné à partir d'une bande (2) disponible sous forme de produit au mètre.

5. Procédé pour rendre étanche un interstice annulaire avec une traversée de paroi selon une des revendications précédentes, **caractérisé en ce que**, dans une première étape, l'élément de forme perforé (1) est étiré plastiquement à la main à l'épaisseur de la paroi, dans une deuxième étape, l'élément de forme perforé (1) est cintré en forme de manchon autour de la conduite (10) et fermé en périphérie dans la zone de chevauchement (X) à l'aide du mécanisme de fermeture (6a, 6b), dans une autre étape, l'élément de forme perforé conformé en manchon (1) est introduit axialement dans l'ouverture traversante (7) et, dans une dernière étape, l'interstice annulaire situé entre la conduite (10) et l'élément de forme (1) est comblé avec une matière expansible et durcissable (11), la matière expansible et durcissable (11) fixant l'élément de forme (1) à la paroi (8) en gonflant de manière dosée à travers l'élément de forme perforé (1).

6. Procédé selon la revendication 5, **caractérisé en ce que**, dans une phase précédente, l'élément de forme perforé (2) est tronçonné à partir de la bande (2) disponible sous forme de produit au mètre.

7. Traversée de paroi selon la revendication 1 formée en produit coupe-feu, **caractérisée en ce que** l'élément de forme à rigidité propre (1) comporte, au moins dans la zone qu'il occupe dans l'ouverture traversante (7) de la paroi (8), une matière intumescente (11').

8. Produit coupe-feu selon la revendication 7, **caractérisé en ce que** les orifices (4) de l'élément de forme perforé (1) sont inférieurs à 50 mm².

9. Produit coupe-feu selon la revendication 7 ou 8, **caractérisé en ce que** l'élément de forme perforé (1) est revêtu au moins partiellement d'une couche de matière intumescente (11').

10. Produit coupe-feu selon la revendication 9, **caractérisé en ce que** l'élément de forme perforé (1) revêtu d'une couche de matière intumescente (11') est enroulé en spirale autour de la conduite (10) en formant plusieurs épaisseurs superposées.

11. Produit coupe-feu selon une des revendications 7 à 10, **caractérisé en ce que** les deux arêtes frontales de l'élément de forme perforé (1) sont revêtues d'une couche en forme de bande de matière intumescente (11').
